# EUROPEAN PATENT APPLICATION

(11) **EP 2 151 759 A2**
(43) Date of publication of application: **10.02.2010**
(21) Application number: 09161499.0
(22) Date of filing: 29.05.2009
(51) Int. Cl.: G06F 11/00

(54) **Transmission path selecting apparatus and method**

(30) Priority: 25.07.2008 JP 2008192636
(71) Applicant: Fujitsu Ltd., Kawasaki-shi, Kanagawa 211-8588 (JP)
(72) Inventor: Ebisuzaki, Koji, Kawasaki-shi Kanagawa 211-8588 (JP)
(74) Representative: Fenlon, Christine Lesley

(57) **Abstract**

A transmission path selecting apparatus includes a receiving unit that receives a data transmission request and information that identifies the data transmission request, a holding unit that holds the information in association with a transmission path that was previously assigned to the information, a searching unit that searches the holding unit based on the information received with the data transmission request by the receiving unit, when the receiving unit receives the data transmission request, a transmission path selecting unit that selects a transmission path to be assigned to the data transmission request, from among a plurality of transmission paths other than a transmission path obtained as a result of the search by the searching unit, and an updating unit that updates a content held by the holding unit based on a result of the selection by the transmission path selecting unit.

## Description

### FIELD

The embodiments discussed herein are directed to a transmission path selecting apparatus and a transmission path selecting method for selecting a path to be used for transmitting data from among a plurality of transmission paths and a data transmitting system and a computer device that use the method.

### BACKGROUND

A technology of transmitting data using a plurality of transmission paths has been used for a serial transfer bus or the like. Typically, in a system having a plurality of data transfer buses, an available bus is used circularly as a request transfer bus per request transfer.

When a failure occurs in any one of the buses, a bus has to be assigned, that is, the request transfer bus has to be selected, avoiding the failed bus. Therefore, conventionally, a data receiving end at a downstream end of the communication detects and reports the failure to a data transmitting end at an upstream end of the communication. In response to the report received, the upstream end blocks the failed bus, thereby avoiding the failed bus from being selected as the request transferring bus for any subsequent requests (see for example, Japanese Lain-open Patent Publication No. 2008-21153).

However, because the data receiving end detects the failure, to know that the fault has occurred, a transmission path selecting apparatus at the data transmitting end is required to communicate with the data receiving end.

Further, a failure report request transmitted from the data receiving end to the transmission path selecting apparatus at the data transmission end may fail due to a communication error. If the failure report request fails due to the communication error, the transmission path selecting apparatus may not recognize the occurrence of the failure and therefore, has a risk of assigning a transmission request to the failed bus.

Therefore, there is a problem of not being able to avoid the failed bus at the data transmission end alone.

It is desirable to provide a transmission path selecting apparatus and a transmission path selecting method that are capable of avoiding a failed bus and assigning a path at a transmission end alone, and a data transmitting system and a computer device that use the method.

### SUMMARY

According to an aspect of an embodiment of the invention, a transmission path selecting apparatus includes a receiving unit that receives a data transmission request and transmission request identifying information that identifies the data transmission request, a holding unit that holds the transmission request identifying information in association with a transmission path that was previously assigned to the transmission request identifying information, a searching unit that searches the holding unit based on the transmission request identifying information received with the data transmission request by the receiving unit, when the receiving unit receives the data transmission request. The transmission path selecting apparatus further includes a transmission path selecting unit that selects a transmission path to be assigned to the data transmission request, from among a plurality of transmission paths other than a transmission path obtained as a result of the search by the searching unit, and an updating unit that updates a content held by the holding unit based on a result of the selection by the transmission path selecting unit.

The desirable features and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

Preferred features of the present invention will now be described, purely by way of example, with reference to the accompanying drawings, in which:
FIG. 1 is a schematic diagram of a configuration of a data transmitting system according to an embodiment of the present invention;
FIG. 2 is an explanatory diagram for a tag register;
FIG. 3 is a schematic diagram of a configuration of a server including a plurality of buses for transmission and reception between a CPU and an IO;
FIG. 4 is a flowchart of a processing operation of a bus selecting circuit;
FIG. 5 is a flowchart of a bus assigning process included in FIG. 4;
FIG. 6 is an explanatory diagram for normal transmitting and receiving operations;
FIG. 7 is an explanatory diagram for a transmission and reception flow at a time of failure in a transmitting bus Bs1 to the IO;
FIG. 8 is an explanatory diagram for a conventional transmission and reception flow based on failure detection; and
FIG. 9 is a schematic diagram of a configuration of a system for transmitting data from the IO to the CPU.

### DESCRIPTION OF EMBODIMENTS

Embodiments of a transmission path selecting apparatus, a data transmitting system, a computer device, and a transmission path selecting method according to the present invention will be described in detail below with reference to the accompanying drawings.

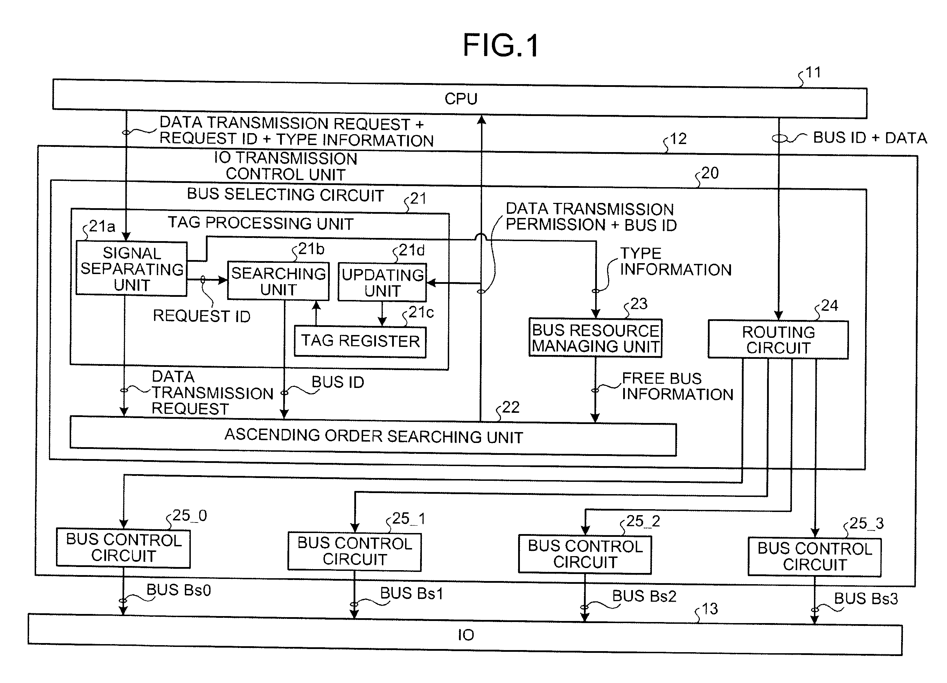

FIG. 1 is a schematic diagram of a configuration of a data transmitting system according to an embodiment of the present invention. The data transmitting system in FIG. 1 transmits data from a central processing unit (CPU) to an input/output device (IO) and is part of a computer device that functions as a server having a CPU 11 and an IO 13. The IO is an external input/output interface that performs input or output of data between the CPU and external devices. Data is transmitted from the CPU 11 to the IO 13 via a plurality of serial buses Bs0 to Bs3. Assignment of transmission data to the buses is carried out by an IO transmission control unit 12.CPU When the CPU 11 performs a data transmission to the IO 13, the CPU 11 transmits a data transmission request to the IO transmission control unit 12. In response to the data transmission request, the IO transmission control unit 12 assigns a bus to the data transmission request and returns a bus ID of the assigned bus with a data transmission permission to the CPU 11.

In response to the data transmission permission received, the CPU 11 transmits the bus ID of the assigned bus and the data to be transmitted to the IO transmission control unit 12. The IO transmission control unit 12 transmits the data received from the CPU 11 to a bus indicated by the bus ID received from the CPU 11.

In a conventional configuration, when a CPU requests a data transmission, the CPU does not provide information identifying data to be transmitted. In contrast, the CPU 11 according to the present embodiment provides a request ID used in the CPU 11 to identify the data to be transmitted to the IO transmission control unit 12 as transmission request identifying information.

Particularly, the CPU 11 transmits to the IO transmission control unit 12 a single-bit signal REQ-V indicating that the data transmission request is valid, a four-bit signal REQ-ID indicating the request ID, and a two-bit signal REQ-TYPE indicating a type of the request. Each of the REQ-V, REQ-ID, and REQ-TYPE is transmitted on a different signal line.

The REQ-ID is a unique ID specified for each request issued from the CPU to the IO. The specified REQ-ID cannot be reused until that request is completed. The REQ-TYPE has a value that is specified depending on a size of the request issued by the CPU when the CPU requests issuance of the request.

The IO transmission control unit 12 includes a bus selecting circuit 20 and bus control circuits 25_0 to 25_3 therein. The bus selecting circuit 20 includes a tag processing unit 21, an ascending order searching circuit 22, a bus resource managing unit 23, and a routing circuit 24 therein. The tag processing unit 21 includes a signal separating unit 21a, a searching unit 21b, a tag register 21c, and an updating unit 21d therein.

The signal separating unit 21a in the tag processing unit 21 receives the data transmission request (REQ-V), the request ID (REQ-ID) that is the transmission request identifying information, and type information of the request (REQ-TYPE) from the CPU 11. Then, the signal separating unit 21a passes the request ID to the searching unit 21b, passes the type information to the bus resource managing unit 23, and transmits the data transmission request to the ascending order searching circuit 22.

The tag register 21c holds each request ID and the bus ID indicating the bus used in a previous data transmission in association with each other. The searching unit 21b searches the tag register 21c for a bus ID by using the request ID passed from the signal separating unit 21a as a key and transmits the bus ID obtained as a result of the search to the ascending order searching circuit 22.

The bus resource managing unit 23 manages transmission waiting statuses of data in the bus control circuits 25_0 to 25_3. When the routing circuit 24 transmits data to any one of the bus control circuits 25_0 to 25_3, the bus resource managing unit 23 increases an amount of data waiting to be transmitted (hereinafter referred to as "a waiting transmission amount") of that bus control circuit by an amount corresponding to the transmitted data. When any one of the bus control circuits 25_0 to 25_3 has carried out a data transmission, the bus resource managing unit 23 decreases the waiting transmission amount of that bus control circuit by an amount corresponding to the transmitted data amount.

The waiting transmission amount of each bus control circuit is compared with a transmission waiting buffer capacity of each bus control circuit to obtain an amount of free space in each bus control circuit. The bus resource managing unit 23 compares a size of the request indicated by the type information passed from the tag processing unit 21 with the amount of free space for each bus control circuit to provide the bus control circuit that has the amount of free space greater than the request size to the ascending order searching circuit 22 as free bus information.

The ascending order searching circuit 22 is a transmission path selecting unit that, upon receiving the data transmission request from the signal separating unit 21a, selects a bus to be assigned to the data transmission request. That is, the ascending order searching circuit 22 searches the bus assignable to the data transmission request from the free bus information and selects the bus obtained as a result of the search as the bus to be assigned to the data transmission request. Then the ascending order searching circuit 22 transmits the bus ID of the selected bus with the data transmission permission to the CPU 11 and the updating unit 21d. For this assignment, the ascending order searching circuit 22 assigns a bus ID other than the bus ID output by the searching unit 21b, that is, the bus ID previously assigned to the same request ID.

The updating unit 21d updates the tag register 21c based on the search result from the ascending order searching circuit 22. More particularly, the updating unit 21d holds the bus ID output by the ascending order searching circuit 22 in association with the request ID in the tag register. Therefore, the updating unit 21d continuously holds an up-to-date bus ID with respect to each request ID.

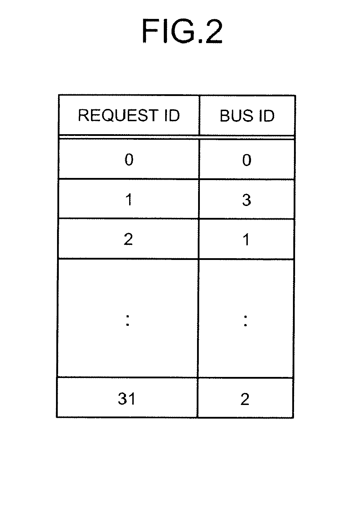

FIG. 2 is an explanatory diagram for the tag register 21c. The tag register 21c illustrated in FIG. 2 holds therein each of the request IDs 0 to 31 in association with one of the bus IDs 0 to 3. Each of the bus IDs 0 to 3 is identification information associated with the buses Bs0 to Bs3.

The number of entries in the tag register 21c is determined by the number of request IDs used by the CPU 11. The CPU 11 may issue as many data transmissions as the request IDs and let the data transmissions wait. The CPU 11 reuses each request ID for another data transmission after using that request ID. That is, the request IDs are each unique at an arbitrary time point and uniquely determine any data transmission requests existing simultaneously, but the same request ID may correspond to a data transmission of a different content at a different time point. Because the CPU 11 is in control of a content of a data transmission request corresponding to each request ID, even when making the data transmission request having the same request ID, the CPU 11 recognizes whether the data transmission request is a re-request for the same data transmission request, or a new data transmission request for different data. The IO transmission control unit 12 is not concerned with a content of each data transmission request and does not distinguish whether a data transmission request assigned with a request ID is a re-request or a new request.

Referring to FIG. 1 again, upon obtaining the data transmission permission and the bus ID from the IO transmission control unit 12, the CPU 11 transmits the obtained bus ID and the data to be transmitted to the IO transmission control unit 12. The routing circuit 24 in the IO transmission control unit 12 transmits the data to be transmitted to the bus control circuit corresponding to the bus specified by the CPU 11.

The bus control circuits 25_0 to 25_3 correspond to the buses Bs0 to Bs3, respectively, and temporality buffer and sequentially transmit the data transmitted from the routing circuit 24 through the corresponding bus.

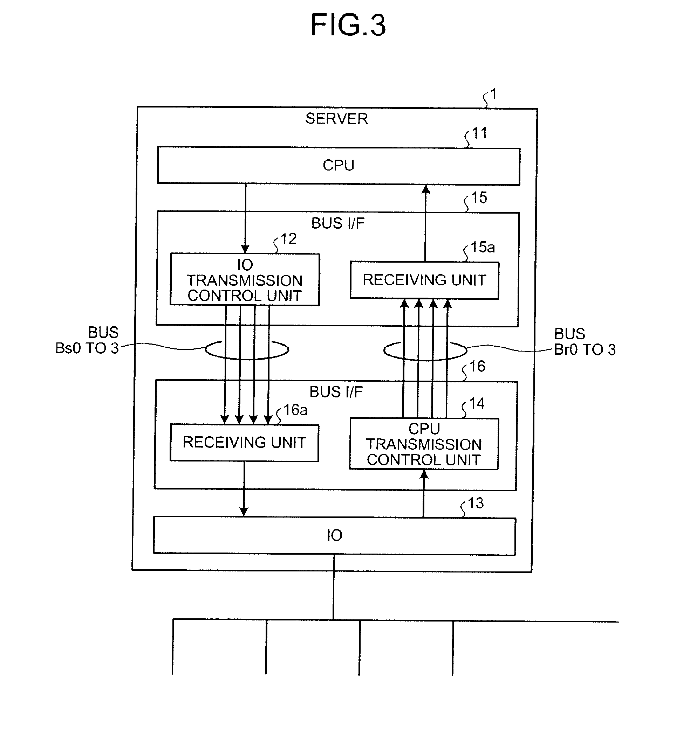

FIG. 3 is a schematic diagram of a configuration of a server 1 including a plurality of buses for transmission and reception between the CPU 11 and the IO 13. More particularly, the server 1 includes the CPU 11, the IO 13, and bus interfaces 15 and 16 therein.

The bus interface 15 is provided at a CPU 11 end and the bus interface 16 is provided at an IO 13 end. The bus interface 15 has the IO transmission control unit 12 and a receiving unit 15a therein. The bus interface 16 has a CPU transmission control unit 14 and a receiving unit 16a therein.

When data is transmitted from the CPU 11 to the IO 13, the IO transmission control unit 12 in the bus interface 15 performs transfer control and assigns the data to the buses Bs0 to Bs3. The receiving unit 16a in the bus interface 16 receives the data from the buses Bs0 to Bs3 and passes the received data to the IO 13.

Similarly, when data is transmitted from the IO 13 to the CPU 11, the CPU transmission control unit 14 in the bus interface 16 performs transfer control and assigns the data to buses Br0 to Br3. The receiving unit 15a in the bus interface 15 receives the data from the buses Br0 to Br3 and passes the received data to the CPU 11.

The IO 13 is connected to a device external to the server 1 and is configured to transmit the data received from the CPU 11 to the external device or transmit data input from the external device to the CPU 11.

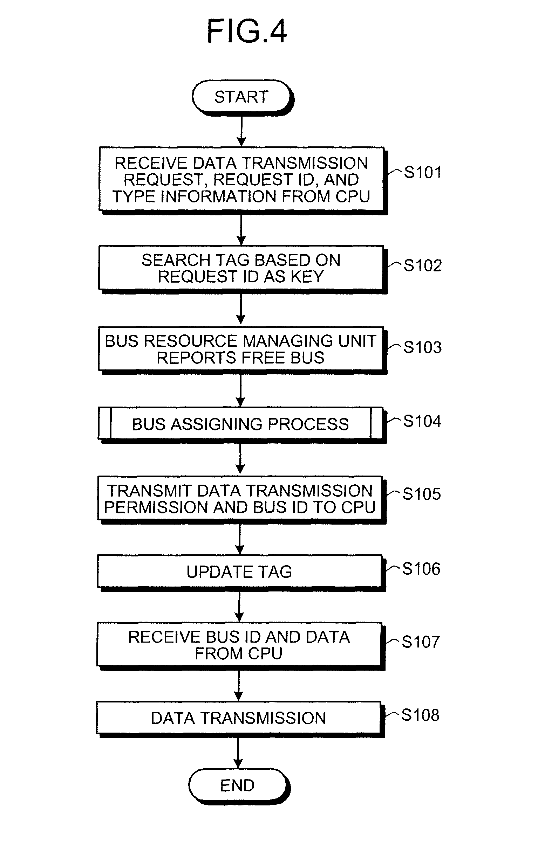

Next, referring to FIG. 4, a processing operation of the bus selecting circuit 20 will be explained. As illustrated in FIG. 4, the bus selecting circuit 20 receives the data transmission request, the request ID, and the type information from the CPU 11 (S101).

A searching unit 21b in the tag processing unit 21 searches the tag register 21c based on the request ID as the key (S102), and the bus resource managing unit 23 reports any free bus/buses having the amount of free space equal to or greater than the size indicated by the type information (S103). The ascending order searching circuit 22 carries out a bus assigning process based on the data transmission request and the bus ID (S104).

After the bus assigning process, the ascending order searching circuit 22 transmits the data transmission permission and the bus ID to the CPU 11 (S105). In addition, the updating unit 21d updates the tag register 21c (S106).

The routing circuit 24 receives the bus ID and the data from the CPU 11 (S107) and then transmits the received data to a bus control circuit that corresponds to the received bus ID (S108) to end the process.

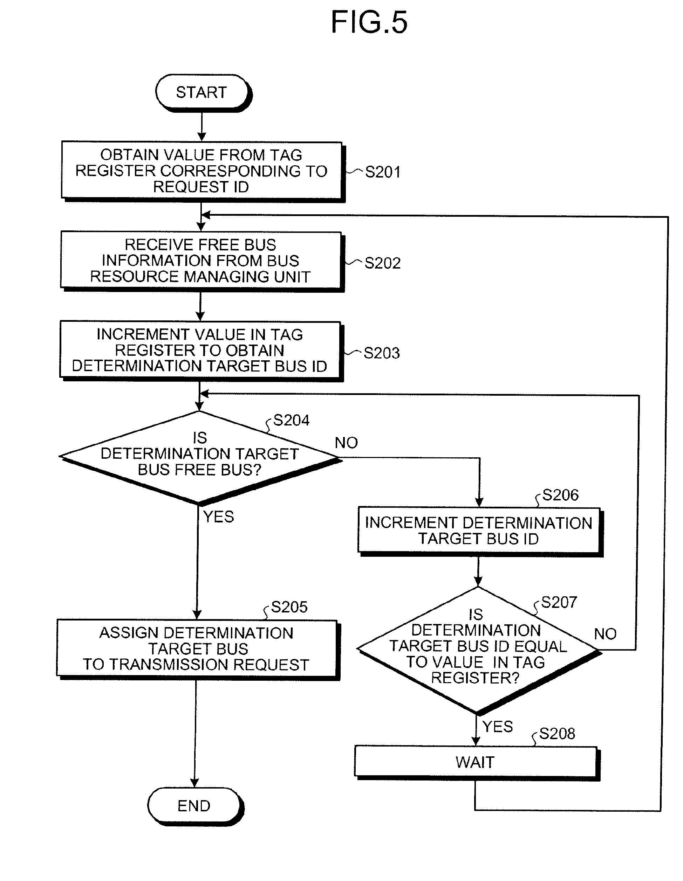

FIG. 5 is a flowchart of the bus assigning process (S104) explained with reference to FIG. 4. As indicated in FIG. 5, the ascending order searching circuit 22 obtains a tag register value corresponding to the request ID, that is, the previously used bus ID, from the tag processing unit 21 (S201). The ascending order searching circuit 22 also receives the free bus information from the bus resource managing unit 23 (S202).

Then, the ascending order searching circuit 22 increments the tag register value to obtain a determination target bus ID (S203) and determines if the determination target bus ID corresponds to one of the free buses (S204).

If a waitable amount is equal to or greater than the data amount requested to be transmitted (YES at Step S204), the determination target bus is assigned to the transmission request (S205) and the process is ended.

If the waitable amount is smaller than the data amount requested to be transmitted (NO at Step S204), the bus ID of the target bus is incremented again to obtain a new determination target bus ID (S206). If the new determination target bus ID is not equal to the value in the tag register, that is the bus ID previously used (NO at Step S207), the ascending order searching circuit 22 returns to S204 to repeat the process.

If the new determination target bus ID is equal to the value in the tag register, that is, the previously used bus ID (YES at Step S207), meaning that none of the buses other than the bus corresponding to the previously used bus has the amount of free space and that the determination have circulated through the target buses once, the ascending order searching circuit 22 waits for a predetermined time period (S208) and then returns to S202.

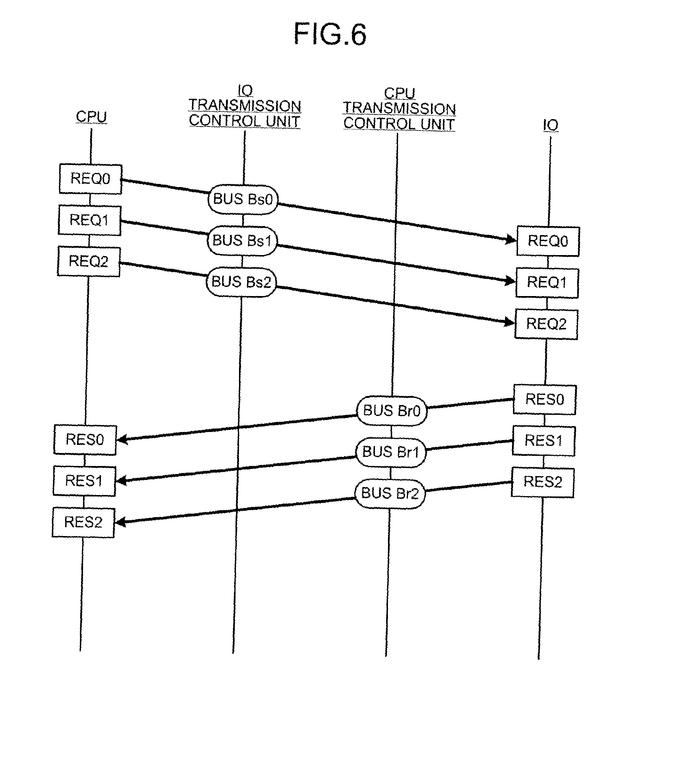

FIG. 6 is an explanatory diagram for normal transmitting and receiving operations. In an example illustrated in FIG. 6, the CPU 11 sequentially issues requests REQ0, REQ1, and REQ2 having the request IDs 0, 1, and 2, respectively.

The IO transmission control unit 12 assigns buses Bs0, Bs1, and Bs2 to the requests REQ0, REQ1, and REQ2 issued by the CPU 11, respectively, and transmits the assigned requests to the IO 13.

The IO 13 processes the requests REQ0, REQ1, and REQ2 to create responses RES0, RES1, and RES2 thereto and transmits the responses to the CPU 11. The CPU transmission control unit 14 assigns the available buses Br0 to Br2 to the responses RES0, RES1, and RES2 and transmits the assigned responses to the CPU 11. Upon the CPU 11 receiving the responses, processing of each request is completed.

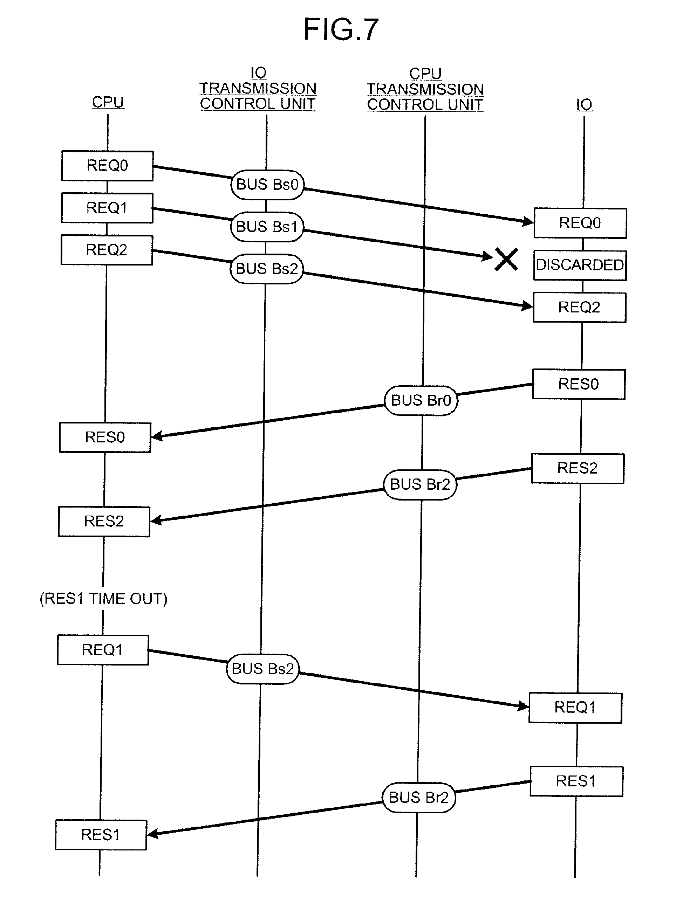

FIG. 7 is an explanatory diagram for a transmission and reception flow at a time of failure in the transmitting bus Bs1 to an IO. As in FIG. 6, when requests REQ0, REQ1, and REQ2 are transmitted from the CPU 11 via the buses Bs0, Bs1, and Bs2, respectively, the IO 13 receives the requests REQ0 and REQ2 normally. However, the REQ1 is discarded on its way due to a transfer error caused by a failure in the bus Bs1.

The IO 13 processes the requests REQ0 and REQ2 to transmit responses RES0 and RES2 thereto to the CPU 11. Upon the CPU 11 receiving the responses RES0 and RES2, processing for the request Ids 0 and 2 is completed. However, the discarded request REQ1 has not been processed and the IO 13 has not transmitted a response RES1.

Because the CPU 11 does not receive the response RES1 to the request REQ1, when a response monitoring time period of REQ1 is over, that is, when a time-out occurs, the CPU 11 performs retransmission of the request REQ1. When performing the retransmission, the CPU 11 searches for a bus other than the previously used bus Bs1 as a transmission bus. In an example shown in FIG. 7, the bus Bs2 next to the bus Bs1 is free, and therefore, the bus Bs2 is selected and used for retransmitting the request REQ1.

The bus Bs2 is normal, and therefore, the requests REQ1 is successfully retransmitted to the IO 13. The IO 13 processes the request REQ1 to create the response RES1 thereto and transmits the response to the CPU 11. The CPU 11 receives the response RES1 to complete the processing for the request ID 1.

As described, the IO transmission control unit 12 performs transfer control such that the requests having the same request ID do not use the same bus in succession. Therefore, the retransmission through the time-out of the request can be successfully performed. In addition, the transfer control does not require detection of failure occurrence and notification from a downstream end, thereby avoiding a failed bus easily by a transmission end alone.

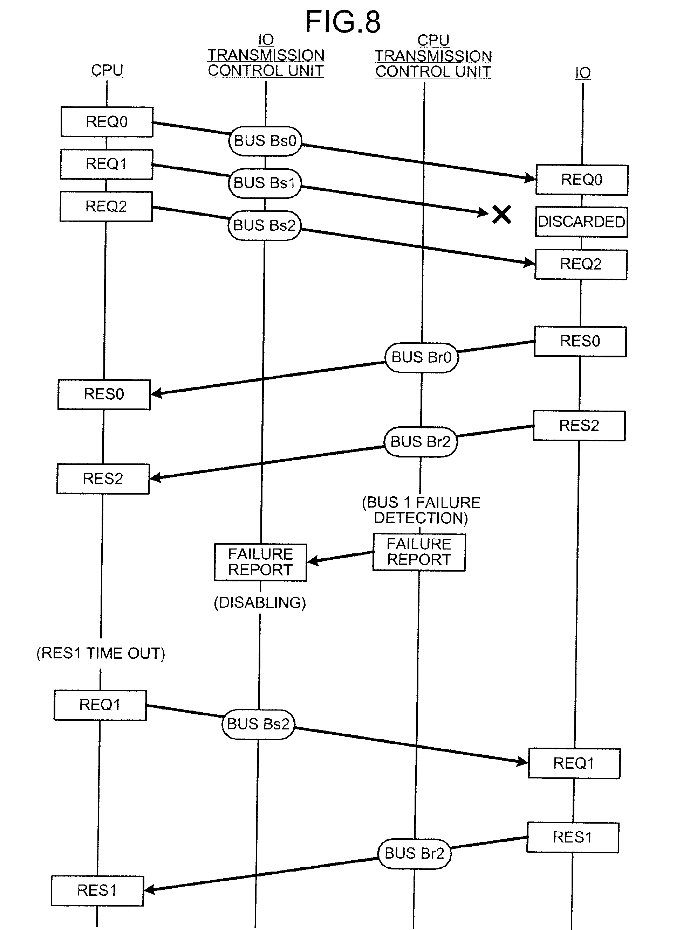

FIG. 8 is an explanatory diagram for a conventional transmission and reception flow based on failure detection. As with the examples illustrated in Figs. 6 and 7, requests REQ0, REQ1, and REQ2 are transmitted from the CPU 11 via the buses Bs0, Bs1, and Bs2. The IO 13 receives the requests REQ0 and REQ2 normally, but the request REQ1 is discarded due to a transfer error caused by a failure in the bus Bs1.

The IO 13 processes the requests REQ0 and REQ2 and transmits responses RES0 and RES2 thereto to the CPU 11. The CPU 11 receives the responses RES0 and RES2 to complete the processing for the request IDs 0 and 2.

The CPU transmission control unit detects and reports the failure in the bus Bs1 to the to-IO transmission control unit. In response to the failure report, the to-IO transmission control unit disables the bus Bs1 and changes settings to no longer assign any transmission data thereafter to the bus Bs1.

After that, because the CPU 11 does not receive a response RES1 to the request REQ1, upon the response monitoring time period of REQ1 being over, the CPU 11 performs retransmission of the request REQ1. When performing the retransmission, the CPU 11 uses a bus other than the failed bus Bs1 as a transmission bus because the to-IO transmission control unit has disabled the failed bus Bs1. Consequently, the request REQ1 is successfully retransmitted to the IO 13. The IO 13 processes the request REQ1 and transmits the response RES1 thereto to the CPU 11. The CPU 11 receives the response RES1 to complete the processing for the request ID 1.

As described, in known transfer control, a failure report has to be transmitted from a downstream end to an upstream end so that the upstream end recognizes the occurrence of failure to block the failed bus. On the contrary, the control transfer by the IO transmission control unit 12 does not require recognition of a fault occurrence nor notification from a downstream end. Further, assigning of a transmission request to a failed bus due to non-arrival of a failure notification can be avoided.

Although the data transmission from the CPU to the IO has been described above, similar transfer control can be applied to a data transmission from the IO to the CPU.

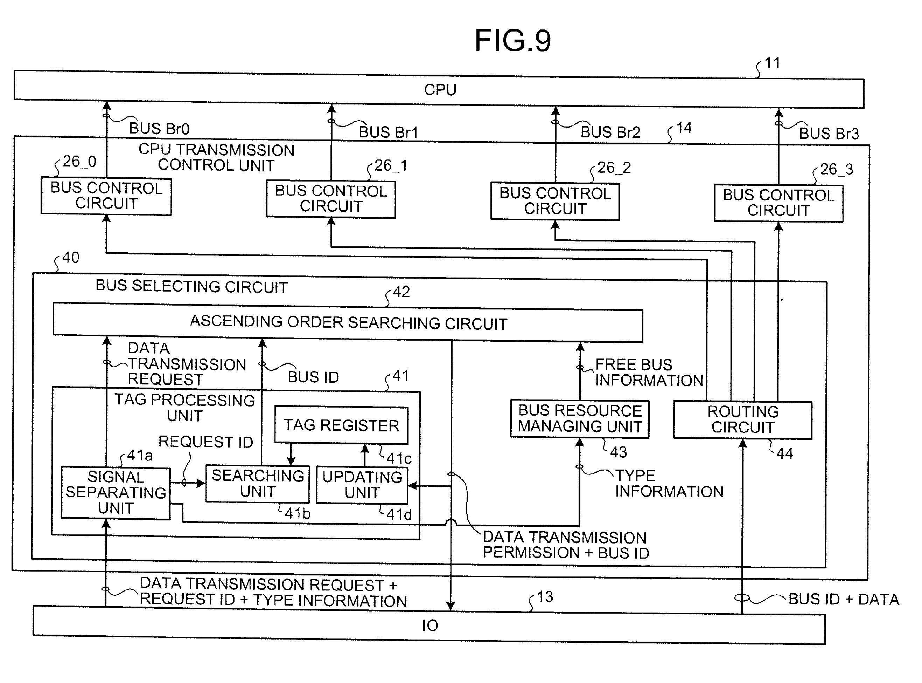

FIG. 9 is a schematic diagram of a configuration of a system that performs a data transmission from the IO 13 to the CPU 11. Data is transmitted from the IO 13 to the CPU 11 via a plurality of serial buses Br0 to Br3. The CPU transmission control unit 14 assigns the transmitted data to the buses.

When the IO 13 transmits data to the CPU 11, the IO 13 transmits a data transmission request to the CPU transmission control unit 14. In response to the data transmission request, the CPU transmission control unit 14 assigns a bus to the data transmission and returns an ID of the assigned bus with a data transmission permission to the IO 13.

The IO 13 receives the data transmission permission, transmits the assigned bus ID and the data to be transmitted to the CPU transmission control unit 14. The CPU transmission control unit 14 transmits the data received from the IO 13 to the bus indicated by the bus ID received from the IO 13.

The CPU transmission control unit 14 has a bus selecting circuit 40 and bus control circuits 26_0 to 26 3 therein. The bus control circuits 26_0 to 26 3 correspond to the buses Br0 to Br3, respectively, and temporality buffer the data transmitted from the bus selecting circuit 40 and sequentially transmit the data out through the buses.

The bus selecting circuit 40 has a tag processing unit 41, an ascending order searching circuit 42, a bus resource managing unit 43, and a routing circuit 44 therein. The tag processing unit 41 has a signal separating unit 41a, a searching unit 41b, a tag register 41c, and an updating unit 41d therein.

The signal separating unit 41a in the tag processing unit 41 receives the data transmission request, the request ID that is transmission request identifying information, and type information indicating a type of the request from the IO 13. Then the signal separating unit 41a passes the request ID to the searching unit 41b, passes the type information to the bus resource managing unit 43, and transmits the data transmission request to the ascending order searching circuit 42.

The searching unit 41b searches through the tag register 41c using the request ID passed from the signal separating unit 41a as a key and transmits the bus ID obtained as a result of the search to the ascending order searching circuit 42. The tag register 41c holds each request ID correspondingly with the bus ID indicating the bus used in a previous data transmission.

The bus resource managing unit 43 manages transmission waiting statuses of data in the bus control circuits 26_0 to 26_3. When the routing circuit 44 transmits transmission data to any one of the bus control circuits 26_0 to 26_3, the bus resource managing unit 43 increases a waiting transmission amount of that bus control circuit by an amount of the transmission data. When any one of the bus control circuits 26_0 to 26_3 transmits data, the bus resource managing unit 43 decreases the waiting transmission amount of that bus control circuit by an amount of the transmitted data.

An amount of free space in each bus control circuit can be obtained by comparing a waiting transmission amount of each bus control circuit with a transmission waiting buffer capacity of each bus control circuit. The bus resource managing unit 43 compares a size of the request indicated by the type information passed from the tag processing unit 41 with the amount of free space in each bus control circuit to provide the bus control circuit that has an amount of free space greater than the request size to the ascending order searching circuit 42 as free bus information.

The ascending order searching circuit 42 is a transmission path selecting unit that, upon receiving the data transmission request from the signal separating unit 41a, selects a bus to be assigned to the data transmission request. For this selection, the ascending order searching circuit 42 assigns a bus ID other than the bus ID output by the searching unit 41b, that is, other than the bus ID previously assigned to the same request ID, based on the free bus information. Then the ascending order searching circuit 42 transmits the assigned bus ID with the data transmission permission to the IO 13 and the updating unit 41d.

The updating unit 41d updates the tag register 41c based on the result of the search by the ascending order searching circuit 42. That is, the updating unit 41d holds the bus ID output by the ascending order searching circuit 42 correspondingly with the request ID. Therefore, the updating unit 41d will continuously hold an up-to-date bus ID with respect to each request ID.

The IO 13 that has obtained the data transmission permission and the bus ID from the CPU transmission control unit 14 transmits the obtained bus ID with data to be transmitted to the CPU transmission control unit 14. The routing circuit 44 in the CPU transmission control unit 14 transmits the data to the bus control circuit corresponding to the bus specified by the IO 13.

As described above, the bus selecting circuit 20 or 40 that functions as a transmission path selecting apparatus in the present embodiment receives the data transmission request and the request ID that is the transmission request identifying information from the CPU 11 or IO 13 that functions as a data transmitting apparatus. Then, the bus selecting circuit 20 or 40 holds the request ID in association with a transmission path (bus ID) in the tag register.

When the bus selecting circuit 20 or 40 receives a new data transmission request, the bus selecting circuit 20 refers to the tag register and performs the transfer control such that requests having the same request ID do not successively use the same bus.

Therefore, if a time-out occurs due to a bus failure, the request can be successfully retransmitted. Further, in the transfer control, detection of a failure occurrence and notification from a downstream end are not required, and thus a failed bus can be avoided easily by a transmitting end alone.

The disclosed apparatus, system, and method realize assigning of a path while avoiding a failed bus at a transmitting end alone.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of embodiments of the invention. Although the embodiment(s) of the present inventions have been described in detail, it should be understood that the various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A transmission path selecting apparatus comprising:
a receiving unit that receives a data transmission request and transmission request identifying information that identifies the data transmission request;
a holding unit that holds the transmission request identifying information in association with a transmission path that was previously assigned to the transmission request identifying information;
a searching unit that searches the holding unit based on the transmission request identifying information received with the data transmission request by the receiving unit, when the receiving unit receives the data transmission request;
a transmission path selecting unit that selects a transmission path to be assigned to the data transmission request, from among a plurality of transmission paths other than a transmission path obtained as a result of the search by the searching unit; and
an updating unit that updates a content held by the holding unit based on a result of the selection by the transmission path selecting unit.

2. The transmission path selecting apparatus according to claim 1, wherein the transmission path selecting unit sequentially determines if the data transmission request is assignable to the transmission path, starting from the determination with respect a transmission path next to the transmission path held by the holding unit.

3. The transmission path selecting apparatus according to claim 1 or 2, further comprising a managing unit that manages a transmission waiting statuses of data through the plurality of transmission paths, wherein the transmission path selecting unit assigns, to the data transmission request, the transmission path that has an amount of waitable data greater than an amount of data to be transmitted.

4. The transmission path selecting apparatus according to any of claims 1 to 3, wherein the receiving unit further receives type information indicating a type of the data to be transmitted with the data transmission request, and the transmission path selecting unit determines the amount of the data to be transmitted based on the type of the data.

5. The transmission path selecting apparatus according to any of claims 1 to 4, wherein each of the plurality of transmission paths is a serial bus.

6. A data transmitting system comprising:
a data transmitting apparatus that transmits a data transmission request and transmission request identifying information that identifies the data transmission request; and
a transmission path selecting apparatus that selects one of a plurality of transmission paths to be used for transmission of transmission data, the transmission path selecting apparatus including:
a receiving unit that receives the data transmission request and the transmission request identifying information from the data transmitting apparatus;
a holding unit that holds the transmission request identifying information correspondingly with a transmission path that was previously assigned to the transmission request identifying information;
a searching unit that searches the storing unit based on the transmission request identifying information received with the data transmission request by the receiving unit, when the receiving unit receives the data transmission request;
a transmission path selecting unit that selects a transmission path to be assigned to the data transmission request from among the plurality of transmission paths other than a transmission path obtained as a result of the search by the searching unit and reports the selected transmission path to the data transmitting apparatus; and
an updating unit that updates a content held by the holding unit based on a result of the selection by the transmission path selecting unit.

7. The data transmitting system according to claim 6, wherein the data transmitting apparatus provides information used in identifying the transmission data in the data transmitting apparatus to the transmission path selecting apparatus as the transmission request identifying information.

8. A computer device comprising:
a processing unit;
an input/output processor connected to the processing unit via a plurality of transmission paths; and
a transmission control unit that controls a data transmission via the plurality of transmission paths, at least one of the processing unit and the input/output processor outputting a data transmission request and transmission request identifying information that identifies the data transmission request to the transmission control unit when transmitting data to the other of the processing unit and the input/output processor, the transmission control unit comprising:
a receiving unit that receives the data transmission request and the transmission request identifying information;
a holding unit that holds the transmission request identifying information correspondingly with a transmission path that was previously assigned to the transmission request identifying information;
a searching unit that searches the holding unit based on the transmission request identifying information received with the data transmission request by the receiving unit, when the receiving unit receives the data transmission request;
a transmission path selecting unit that selects a transmission path to be assigned to the data transmission request from among the plurality of transmission paths other than a transmission path obtained as a result of the search by the searching unit; and
an updating unit that updates a content held by the holding unit based on a result of the selection by the transmission path selecting unit.

9. A transmission path selecting method comprising:
receiving a data transmission request and transmission request identifying information that identifies the data transmission request;
searching through a holding unit that holds a transmission path that was previously assigned to the transmission request identifying information, based on the transmission request identifying information received with the data transmission request, when the data transmission request is received;
selecting a transmission path to be assigned to the data transmission request from among a plurality of transmission paths other than a transmission path obtained as a result of the search; and
updating a content held by the holding unit based on a result of the selection.
